# EUROPÄISCHE PATENTSCHRIFT

(11) **EP 0 688 962 B1**
(45) Veröffentlichungstag und Bekanntmachung des Hinweises auf die Patenterteilung: **16.09.1998**
(21) Anmeldenummer: 95810371.5
(22) Anmeldetag: 07.06.1995
(51) Int. Cl.: F16B 7/18, B62D 33/04, E04B 2/76

(54) **Eck-Verbindung**
Corner joint
Connexion d'angle

(30) Priorität: 22.06.1994 CH 1976/94
(43) Veröffentlichungstag der Anmeldung: 27.12.1995
(73) Patentinhaber: Alusuisse Technology & Management AG, 8212 Neuhausen am Rheinfall (CH)
(72) Erfinder: Leutenegger, Simon, CH-8037 Zürich (CH)

(56) Entgegenhaltungen:
- EP-A- 0 452 256
- DE-U- 8 701 973

## Beschreibung

Vorliegende Erfindung betrifft eine Eck-Verbindung eines ersten Profiles mit C-förmigem Anschluss mit einem im Winkel dazu angeordneten zweiten Profil mit C-förmigem Anschluss mittels eines Eckverbinders, der zwei an den beiden Profilen anliegende Schenkel aufweist, die mittels je mindestens einem Befestigungsmittel und einem zugehörigen Gegenhalteelement mit den Profilen verspannt sind, wobei die Profile zwei parallele Profilschenkel, angeformt an einen Quersteg, und an beiden Profilschenkeln auf ihrer dem jeweils anderen Profilschenkel zugewandten Seite je einen Steg aufweisen und der Eckverbinder aus zwei gegeneinander beweglichen Winkelstücken besteht, wobei die Winkelstücke längs ihren an den Profilen anliegenden Schenkeln auf der dem komplementären Winkelstück abgewandten Seite je eine erste, gegen eine Nase am Steg gerichtete, Keilfläche und auf der gegenüberliegenden Seite des Schenkels eine zweite, gegen ein Keilstück gerichtete, Keilfläche aufweisen, beide Profile an beiden Profilschenkeln je einen zum Steg parallelen Wulst haben, die Wülste formschlüssig von einem Klemmstück übergriffen werden, und die Winkelstücke durch mindestens ein Keilstück voneinander gespreizt sind, welches an den zweiten Keilflächen anliegt und durch die Befestigungsmittel gegen das zugehörige Profil gespannt ist. Ferner betrifft die Erfindung ein Winkelstück für den Eckverbinder und eine Gerippestruktur, die der Eck-Verbindung enthält.

Aus der EP 0 452 256 ist eine gattungsgemäße Eck-Verbindung zweier Profile mit C-förmigem Anschluss mittels eines Eckverbinders bekannt. Diese Eck-Verbindung kann ein Mass an Biegungsmomenten übertragen. In der Praxis hat es sich gezeigt, dass diese genannte Eck-Verbindung kräftemässig sich noch erheblich verbessern lässt. Nachteilig ist auch, dass die Eck-Verbindung gemäss EP 0 452 256 einen erheblichen Montageaufwand und entsprechend qualifiziertes Personal bei der Anwendung der Eck-Verbindung verlangt.

Aufgabe vorliegender Erfindung ist es, die genannten Nachteile zu überwinden und eine Eck-Verbindung vorzuschlagen, die sich leicht durch ihre Sinnfälligkeit fehlerlos montieren lässt und grosse Kräfte durch Reibung übertragbar sind.

Erfindungsgemäss wird dies dadurch erreicht, dass das Keilstück, bezüglich des Quersteges, unterhalb der Stege und das Klemmstück oberhalb der Stege angeordnet ist und die Wülste nach oben, gegen das Klemmstück weisen. Mit vorliegender Eck-Verbindung und dabei dem Einpressen von Keilen in entsprechende Nuten sind grosse Kräfte durch Reibung übertragbar.

Ein Winkelstück und eine Gerippestruktur sind in Anspruch 6 bzw. 10 unter Bezugnahme auf die erfindungsgemäße Eck-Verbindung definiert.

Vorteilhafte Ausgestaltungen vorliegender Erfindung können den Ansprüchen 2 bis 5 und 7 bis 10 entnommen werden. Das erste und das zweite Profil können jeweils Profile beispielsweise aus Metall, Kunststoff oder einem Metall-Kunststoffverbund sein. Bevorzugt als Metall sind Aluminium und Aluminiumlegierungen. Insbesondere sind die Profile Strangpressprofile.

Die Profile sind in einem Winkel zueinander angeordnet. Die Profile können einen beliebigen Winkel einschliessen, beispielsweise von 30 bis 90°, wobei ein Winkel von 90°, d.h. Profile, die senkrecht zueinander stehen, der Regelfall ist. Als Befestigungsmittel können beispielsweise Schrauben oder Nieten vorgesehen werden. Als Gegenhalteelemente können beispielsweise Keilstücke, Konussteine, Nutensteine oder Keil-Leisten angewendet werden. Die Keilstücke oder Nutensteine enthalten eine Ausnehmung oder ein Sackloch, das entsprechend dem Befestigungsmittel, insbesondere bei Schrauben als Befestigungsmittel, ein Innengewinde aufweist. Keil-Leisten können beispielsweise auch zwei oder mehrere Ausnehmungen oder Sacklöcher, gegebenenfalls mit Innengewinde, aufweisen.

Das Klemmstück ist beispielsweise ein Formteil aus Metall, wie Aluminium, einer Aluminiumlegierung, Eisen, Stahl, Messing und dergl. Das Klemmstück enthält wenigstens eine Ausnehmung, wie z.B. eine Bohrung, die vom Befestigungsmittel durchdrungen werden kann. Das Klemmstück kann eine vom Befestigungsmittel durchdringbare Parallelogrammplatte mit randständigen Vorsprüngen darstellen. Die Stege weisen je einen zum Steg parallelen Wulst auf. Die Wülste sind zweckmässig Anformungen auf den Stegen und die Stege weisen bevorzugt einen dem freien Ende der Profilschenkel zugewandten Wulst auf, welcher von den Vorsprüngen des Klemmstückes hintergriffen wird. Dadurch wird verhindert, dass beim Anziehen des Befestigungsmittels durch die Wirkung des Keilstückes die Schenkel des Profils gespreizt werden.

Die Winkelstücke können Formteile aus Kunststoff, Metall oder einem Kunststoff-Metall-Verbund darstellen und bevorzugt werden Winkelstücke aus Metallen, wie Aluminium, Aluminiumlegierungen, Eisen, Stahl, Messing usw. Die Winkelstücke können aus dem vollen gearbeitet werden, zweckmässig sind jedoch druckgegossene, gegossene und/oder geschmiedete Winkelstücke. Zumindest im Bereich der gegenseitigen Berührung mit den Profilen können die Oberflächen der Winkelstücke mit einem Rauhigkeitsmuster versehen sein. Ein solches Rauhigkeitsmuster kann durch Sandstrahlen, Schleifen, Rillen, Funkenerosion, Prägen usw. aufgebracht werden. Das Rauhigkeitsmuster ist insbesondere auf den Keilflächen vorhanden.

Nachfolgend wird ein Ausführungsbeispiel der Erfindung anhand der Figuren 1 bis 4 erläutert. Es sind dargestellt:
- Figur 1:: Eine Seitenansicht einer Eck-Verbindung
- Figur 2:: Ein Querschnitt durch eine Eck-Verbindung
- Figur 3 a - e:: Die Seitenansichten und ein Querschnitt durch einen Eckverbinder und ein Schnitt durch die Schenkel des Eckverbinders an zwei verschiedenen Stellen
- Figur 4:: Die Ansicht eines Klemmstückes

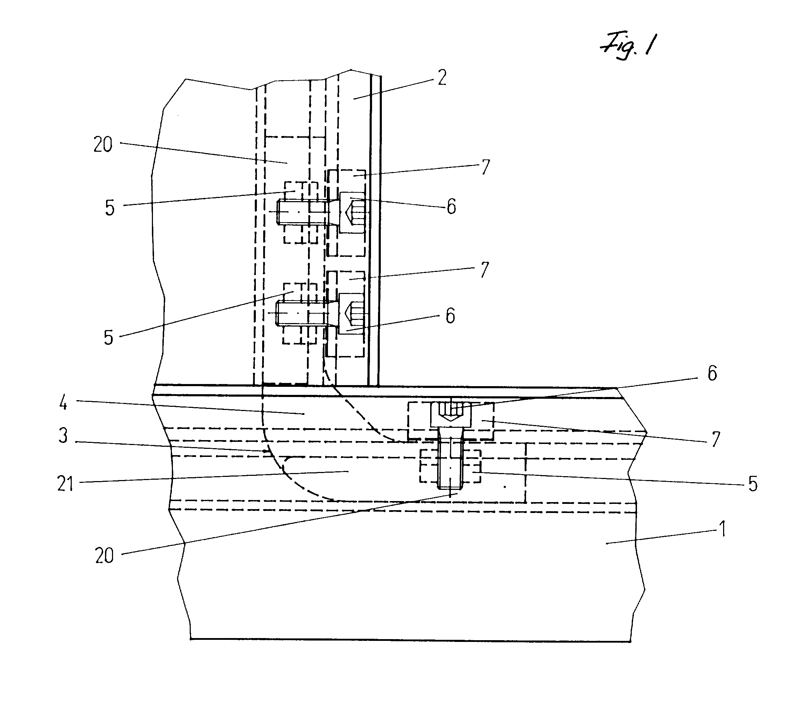

In Figur 1 ist schematisch eine Eck-Verbindung zwischen einem durchgehenden, horizontalen ersten Profil 1 und einem stumpf daran anstossenden vertikalen Profil 2, z.B. einer Säule einer Gerippestruktur, dargestellt. Die Profile 1, 2 sind beispielsweise stranggepresste Aluminiumprofile. Die Verbindung wird mittels einem oder zwei Eckverbindern 3 hergestellt, die je aus zwei Winkelstücken 4 mit den Schenkeln 20 und der Aussenfläche 21, drei Klemmstücken 7, drei Schrauben 6 und drei Keilstücken 5, z.B. Konussteinen, bestehen. Das Profil 1 kann z.B. auch den Rand einer Verbundplatte bilden.

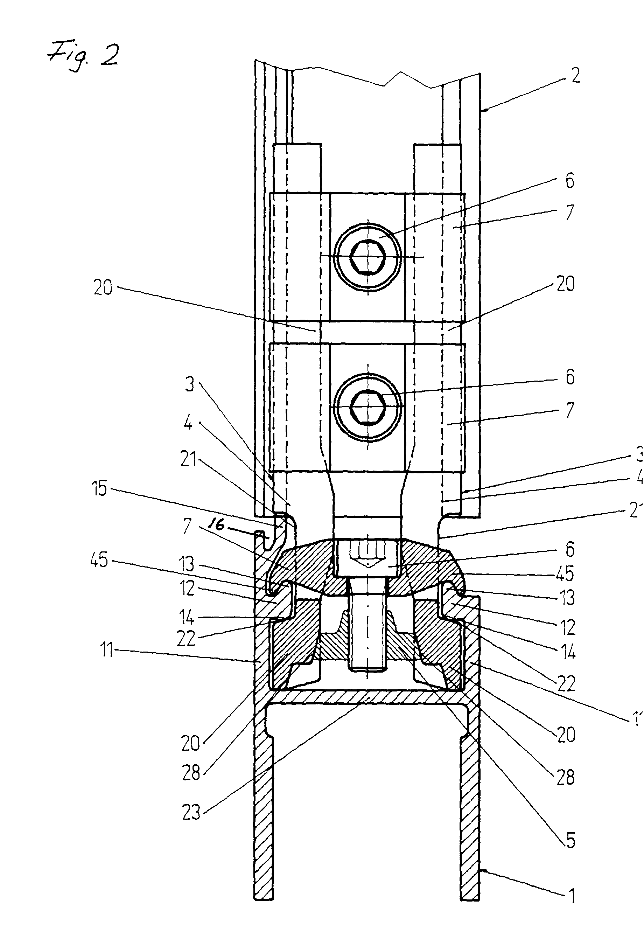

In Figur 2 ist ein Querschnitt durch eine Eck-Verbindung nach Figur 1 dargestellt. Das Profil 1 hat mindestens einen C-förmigen Anschluss mit einer Basis oder einem Quersteg 23, zwei parallelen, daran angeformten Schenkeln 11 und je zwei an den Schenkelelementen nach innen ragenden Stegen 12. Die Stege 12 haben an ihren freien Enden eine gegen den Quersteg 23 gerichtete Nase 14. Die Stege 12 sind gegen ihr freies Ende keilförmig verjüngt.

In vorliegender Ausführungsform ist der eine Profilschenkel 11 an seinem freien Ende gegenüber dem anderen Profilschenkel 11 durch eine Anformung 15 verlängert. Die verlängerte Anformung 15 bildet eine Nut 16 aus. In diese Nut 16 können beispielsweise Fenster, Panels, Böden, Dichtleisten usw. aufgenommen werden.

Die Winkelstücke 4 haben längs ihren beiden an den Profilen 1,2 anliegenden Schenkeln 20 eine geradlinige erste Keilfläche 22. Die Höhe des Schenkels 20 zwischen dessen unterer Begrenzung und der ersten Keilfläche (22) entspricht etwa der lichten Höhe zwischen dem Quersteg 23 und der Nase 14. Die untere Begrenzung des Schenkels 20 kann flach oder leicht gerundet sein.

Die von der Aussenfläche 21 ausgehende erste Keilfläche 22 ist um einen Winkel beispielsweise von etwa 15° gegenüber der Horizontalen zur Aussenfläche geneigt. Die Innenseite der Schenkel 20 der Winkelstücke 4 weist eine zweite Keilfläche 28 auf. Die zweite Keilfläche 28 ist um einen Winkel von beispielsweise etwa 15° gegenüber der Senkrechten geneigt. Die zweite Keilfläche 28 kann sich über die ganze Länge jeden Schenkels 20 erstrecken oder nur Teilbereiche der Schenkel können zu zweiten Keilflächen 28 ausgeformt sein. Zu diesem Zwecke kann in den Teilbereichen der Querschnitt des Schenkels unter Ausbildung der zweiten Keilfläche 28 verjüngt sein.

Zur Herstellung der Verbindung werden zwei Winkelstücke 4 mit ihren Schenkeln 20 zwischen die Stege 12 und den Quersteg 23 eingeschoben, wobei die erste Keilfläche 22 an die Nase 14 anstösst. Unter die Winkelstücke 4 im Bereich der zweiten Keilflächen 28 werden Keilstücke 5, wie beispielsweise Konussteine, eingelegt, deren Keilflächen den zweiten Keilflächen 28 der Winkelstücke 4 entsprechen. Auf den Wulsten 13 der Stege 12 aufliegend, wird ein Klemmstück 7, beispielsweise eine Parallelogrammplatte, angebracht. Die Vorsprünge 45 eines Klemmstückes 7 liegen auf den äusseren Seitenflächen der Wulste 13 auf, d.h. die Vorsprünge 45 hintergreifen die Wulste 13.

Ein Befestigungsmittel, im vorliegenden Beispiel eine Schraube 6, durchdringt eine Ausnehmung, wie eine Bohrung, im Klemmstück 7. Die Schraube 6 steht im Gewindeeingriff mit dem Keilstück 5. Beim Drehen der Schraube 6 wird das Keilstück einem anhebenden Zug ausgesetzt, wobei die Keilflächen des Keilstückes 5 die zweiten Keilflächen 28 und somit den Schenkeln 20 der Winkelstücke 4 eine spreizende Bewegung aufzuzwingen. Die Schenkel 20 werden dabei nach aussen gedrückt und verkeilen sich in der lichten Höhe zwischen dem Quersteg 23 und den Stegen 12, wobei die ersten Keilflächen 22 an den Nasen 14 nach aussen gleiten. Mit dem Festziehen der Schraube 6 liegen die Innenseiten der Vorsprünge 45 des Klemmstückes an den Wulsten 13 der Stege 12 an. Dadurch wird verhindert, dass beim Anziehen der Schraube 6 durch die Wirkung der Keilstücke 5 die Schenkel 11 gespreizt werden.

Eine hinreichende Stabilität mit vorliegender Eck-Verbindung wird beispielsweise bereits dadurch erreicht, dass eines der beiden Schenkelpaare 20 eines Eckverbinders mit je zwei Schrauben, Keilstücken und Klemmstücken, das andere Schenkelpaar 20 mit einer Schraube, einem Keilstück und einem Klemmstück an den entsprechenden Profilen befestigt werden. Jedes Schenkelpaar 20 kann z.B. mit je einer, zwei, drei oder mehreren Schrauben, Keilstücken und Klemmstücken am entsprechenden Profil befestigt werden. Anstelle von zwei oder mehreren Keilstücken und Klemmstücken an einem Schenkelpaar können auch Keilleisten und/oder Klemmleisten verwendet werden.

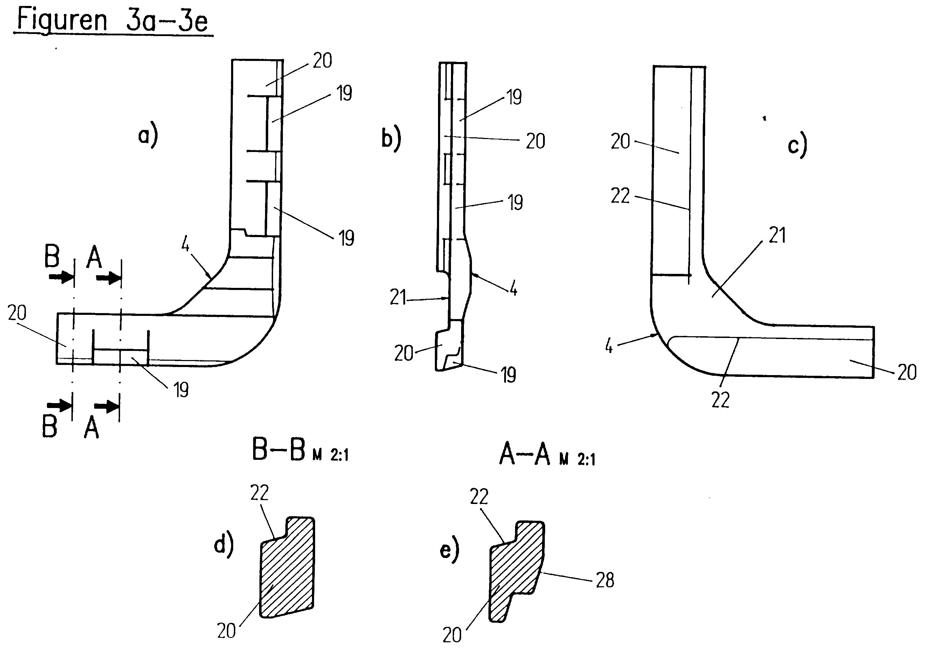

Die Figuren 3a bis e zeigen ein Beispiel eines Winkelstückes 4. In Figur 3a ist das Winkelstück von der Innenseite, d.h. der dem anderen Winkelstück zugewandten Seite, gezeigt. Mit A-A ist der Querschnitt durch den Schenkel 20 eingezeichnet. Der entsprechende Querschnitt ist aus Figur 3e ersichtlich. Der Querschnitt entsprechend A-A ist nur in einem Teilbereich der Schenkel 20 vorhanden, nämlich an jenen Stellen 19, an denen die Keilstücke 5 angeordnet werden.

In den übrigen Bereichen der Schenkel 20 weisen diese einen Querschnitt gemäss der Linie B-B auf. Dieser Querschnitt ist in Figur 3d dargestellt.

Die Figur 3b zeigt eine Ansicht der Stimseite eines Winkelstückes 4 mit den Schenkeln 20, der Aussenfläche 21 und den Stellen 19 für die Keilstückanordnung. In Figur 3c ist das Winkelstück mit der nach aussen zu liegen kommenden Seite zu erkennen. Die Aussenseite ist mit 21 markiert und die Schenkel 20 bilden im wesentlichen das Winkelstück 4. Die ersten Keilflächen 22 sind aus den Schenkeln 20 angeformt oder ausgenommen.

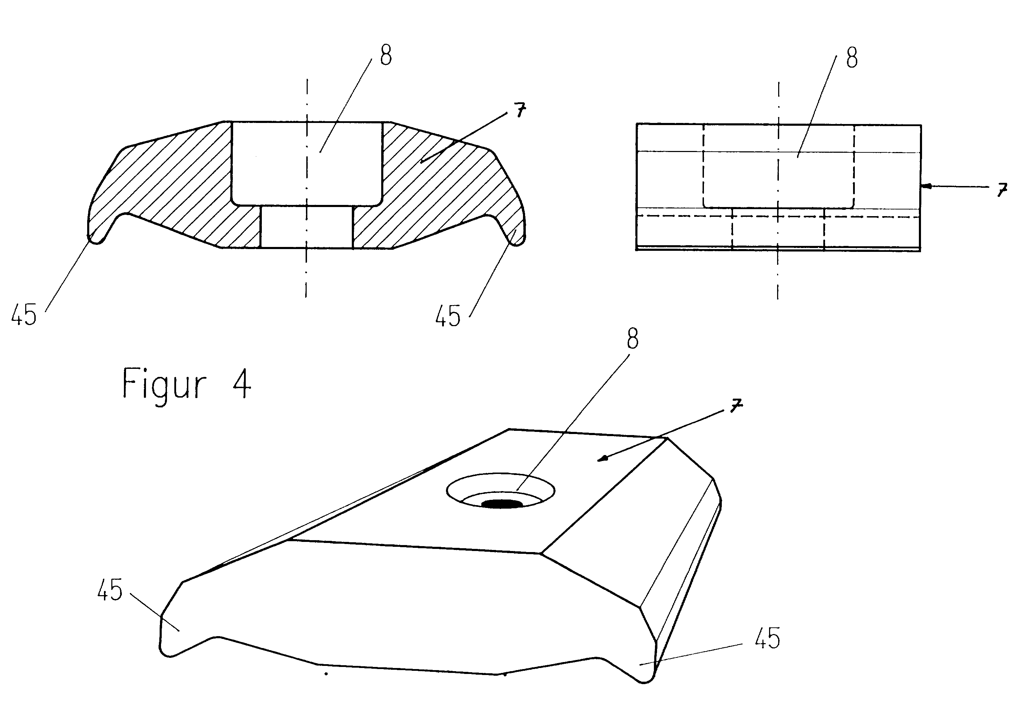

Die Figur 4 zeigt ein Klemmstück 7 mit der Ausnehmung 8 für z.B. eine Schraube 6 (nicht gezeigt) und den Vorsprüngen 45, welche die Wülste 13 der Stege 12 der Schenkel 11 überdecken. Die Ausnehmung 8 ist bevorzugt eine Bohrung kreisrunden Querschnittes. Die Bohrung ist in ihrem oberen Bereich zur Aufnahme eines Schraubenkopfes erweitert.

Bei der erfindungsgemässen Eck-Verbindung werden die auf die Profile einwirkenden Kräfte in die Eckverbinder übertragen. Die Eckverbinder übertragen die Kräfte einerseits durch Reibung, dadurch dass ein Keil in eine Nut gepresst wird und dadurch in Keil-Längsrichtung festsitzt und andererseits senkrecht zur Keilrichtung dadurch, dass eine formschlüssige Verzahnung von Nut und Keil erfolgt. Nut oder Keil können im Eckverbinder oder im Profil (Träger) liegen. Die Richtung des Einpressens liegt typischerweise senkrecht zur Ebene, in welcher die beiden zu verbindenden Profile (Träger) liegen.

Werden als Befestigungsmittel Schrauben verwendet, so können die Gewinde mit selbsthemmenden Mitteln, wie beispielsweise temporären oder dauerhaften Klebestoffen behandelt werden. Solche Klebestoffe sind beispielsweise in einkapsulierter Form in die Gewindegänge eingebracht und bei den während des Verschraubens wirkenden Scherkräften platzen die Klebstoffmikrokapseln auf und geben den Klebstoff frei, der klebend und aushärtend im Gewindegang seine Klebekraft entfaltet

Vorliegende Erfindung kann beispielsweise zur Verwendung in Gerippestrukturen verwendet werden. Die Gerippestrukturen dienen beispielsweise zur Gestaltung von Wagenkasten, Kastenaufbauten oder Karosseriekörpern oder Teilen davon, Gehäusen oder Gehäuseteilen von Landfahrzeugen, wie Strassen- oder Schienenfahrzeugen. Zu diesen Fahrzeugen zählen beispielsweise Busse für den privaten und öffentlichen Personentransport, Lastkraftwagen mit Kasten- oder Kofferaufbauten, Eisenbahnwagen, Triebfahrzeuge usw.. Somit umfasst vorliegende Erfindung auf Gerippestrukturen enthaltend wenigstens eine erfindungsgemässe Eck-Verbindung. Darüber hinaus können die Gerippestrukturen in Schiffen, an Bauten, z.B. sogenannte Off-Shore-Bauten, wie Bohrplattformen auf offener See oder für Masten aller Art verwendet werden.

## Patentansprüche

1. Eck-Verbindung eines ersten Profils (1) mit C-förmigem Anschluss mit einem im Winkel dazu angeordneten zweiten Profil (2) mit C-förmigem Anschluss mittels eines Eckverbinders (3), der zwei an den beiden Profilen (1,2) anliegende Schenkel (20) aufweist, die mittels je mindestens einem Befestigungsmittel (6) und einem zugehörigen Gegenhalteelement (5) mit den Profilen (1,2) verspannt sind, wobei die Profile (1,2) zwei parallele Profilschenkel (11), angeformt an einen Quersteg (23), und an beiden Profilschenkeln (11) auf ihrer dem jeweils anderen Profilschenkel zugewandten Seite je einen Steg (12) aufweisen und der Eckverbinder (3) aus zwei gegeneinander beweglichen Winkelstücken (4) besteht, wobei die Winkelstücke (4) längs ihren an den Profilen (1,2) anliegenden Schenkeln (20) auf der dem komplementären Winkelstück (4) abgewandten Seite je eine erste, gegen eine Nase (14) am Steg gerichtete, Keilfläche (22) und auf der gegenüberliegenden Seite des Schenkels eine zweite, gegen ein Keilstück (5) gerichtete, Keilfläche (28) aufweisen, beide Profile (1,2) an beiden Profilschenkeln (11) je einen zum Steg (12) parallelen Wulst (13) haben, die Wülste (13) formschlüssig von einem Klemmstück (7) übergriffen werden, und die Winkelstücke (4) durch mindestens ein Keilstück (5) voneinander gespreizt sind, welches an den zweiten Keilflächen (28) anliegt und durch die Befestigungsmittel (6) gegen das zugehörige Profil (1,2) gespannt ist,
dadurch gekennzeichnet, dass
das Keilstück (5), bezogen auf den Quersteg (23), unterhalb der Stege (12) und das Klemmstück (7) oberhalb der Stege (12) angeordnet ist und die Wülste (13) nach oben, gegen das Klemmstück (7), weisen.

2. Verbindung nach Anspruch 1, dadurch gekennzeichnet, dass die Stege (12) je einen dem freien Ende der Profilschenkel (11) zugewandten Wulst (13) aufweisen und das Klemmstück (7) eine vom Befestigungsmittel (6) durchdrungene Parallelogrammplatte ist, welche die Wülste (13) hintergreifende Vorsprünge (45) aufweist.

3. Verbindung nach Anspruch 1 oder 2, dadurch gekennzeichnet, dass die ersten Keilflächen (22)gegen die Nase (14) am Steg (12) stossen.

4. Verbindung nach Anspruch 3, dadurch gekennzeichnet, dass die Keilwinkel der ersten Keilflächen (22) der Schenkel (20) und die zweiten Keilflächen (28) selbsthemmend sind.

5. Verbindung nach Anspruch 1, dadurch gekennzeichnet, dass die ersten Keilflächen (22) und/oder die Stege (12), zumindest im Bereich der gegenseitigen Berührung, ein Rauhigkeitsmuster aufweisen.

6. Winkelstück für einen Eckverbinder (3) zur Herstellung einer Verbindung gemäss einem der Ansprüche 1 bis 4, mit zwei im Winkel zueinander angeordneten Schenkeln (20) und einer zu der durch die Schenkel (20) definierten Ebene parallelen Aussenfläche (21), wobei die Schenkel (20) von der Aussenfläche (21) ausgehende, geradlinige erste Keilflächen (22) aufweisen, und die Schenkel (20) auf der der Aussenfläche (21) gegenüberliegenden Seite je eine gegenüber der Aussenfläche (21) geneigte, zur Längsrichtung der Keilfläche (22) parallele zweite Keilfläche (28) haben und sich die erste Keilfläche (22) über den ganzen Schenkel oder Teile des Schenkels (20) erstreckt.

7. Winkelstück nach Anspruch 6, dadurch gekennzeichnet, dass die erste Keilfläche (22) in einem Keilwinkel von 5 bis 30° von der Horizontalen ansteigt und die zweite Keilfläche (28) in einem Keilwinkel von 5 bis 30° von der Vertikalen abweicht.

8. Winkelstück nach Anspruch 7, dadurch gekennzeichnet, dass der Keilwinkel der ersten und der zweiten Keilflächen (22, 28) etwa 15° beträgt.

9. Winkelstück nach einem der Ansprüche 6 bis 8, dadurch gekennzeichnet, dass es gesenkgeschmiedet ist.

10. Winkelstück nach einem der Ansprüche 6 bis 9, dadurch gekennzeichnet, dass es aus einer Aluminiumlegierung besteht

11. Gerippestruktur enthaltend eine Eck-Verbindung nach Anspruch 1.

## Claims

1. Corner joint produced between a first section (1) with a C-shaped connection and a second section (2) with a C-shaped connection arranged at an angle thereto by means of a corner connector (3) having two arms (26) which bear against the two sections (1, 2) and are each fastened to the sections (1, 2) by means of at least one securing means (6) and an associated hold-on element (5), the sections (1, 2) having two parallel arms (11) moulded on to a transverse web (23) and being provided on the sides of the two arms (11) directed towards the other respective arms with respective webs (12) and the corner connector (3) consisting of two angle pieces (4) which can move relative to one another, the angle pieces (4) being provided along their arms (20) bearing against the sections (1, 2) on the sides remote from the complementary angle pieces (4) with respective first wedge faces (22) directed towards a lug (14) on the web and on the opposite sides of the arms with second wedge faces (28) directed towards a wedge piece (5), both sections (1, 2) being provided on both arms (11) with respective beads (13) parallel to the web (12), the beads (13) being positively engaged by a clamping piece (7) and the angle pieces (4) being spread apart by means of at least one wedge piece (5) which bears against the second wedge face (28) and is braced against the associated section (1, 2) by the securing means (6), characterised in that the wedge piece (5) is arranged below the webs (12) and the clamping piece (7) is arranged above the webs (12) relative to the transverse web (23) and the beads (13) are directed upwards towards the clamping piece (7).

2. Joint according to claim 1, characterised in that the webs (12) each have a bead (13) directed towards the free ends of the section arms (11) and the clamping piece (7) is a parallelogram-shaped plate which is traversed by the securing means (6) and is provided with projections (45) engaging behind the beads (13).

3. Joint according to claim 1 or claim 2, characterised in that the first wedge faces (22) abut against the lug (14) on the web (12).

4. Joint according to claim 3, characterised in that the wedge angle of the first wedge faces (22) of the arms (20) and the second wedge faces (28) are self-locking.

5. Joint according to claim 1, characterised in that the first wedge faces (22) and/or the webs (12) are provided at least in the region of mutual contact with a roughness pattern.

6. Angle piece for a corner connector (3) for producing a joint according to one of claims 1 to 4, comprising two arms (20) arranged at an angle to one another and an outer face (21) parallel to the plane defined by the arms (20), the arms (20) having rectilinear first wedge faces (22) departing from the outer face (21) and the arms (20) being provided on the sides opposite the outer face (21) with respective second wedge faces (28) parallel to the longitudinal direction of the wedge faces (22) and inclined relative to the outer face (21) and the first wedge face (22) extending over the entire arm or parts of the arm (20).

7. Angle piece according to claim 6, characterised in that the first wedge face (22) rises from the horizontal at a wedge angle of 5 to 30° and the second wedge face (28) diverges from the vertical at a wedge angle of 5 to 30°.

8. Angle piece according to claim 7, characterised in that the wedge angle of the first and second wedge faces (22, 28) is approximately 15°.

9. Angle piece according to one of claims 6 to 8, characterised in that it is drop-forged.

10. Angle piece according to one of claims 6 to 9, characterised in that it consists of an aluminium alloy.

11. Framework structure containing a corner joint according to claim 1.

## Revendications

1. Jonction de coin d'un premier profilé (1) avec raccord en forme de C et d'un second profilé (2) avec raccord en forme de C, agencé sous un angle par rapport au premier, au moyen d'un élément de jonction de coin (3), lequel comprend deux bras (20) appliqués contre les deux profilés (1, 2), lesquels sont serrés avec les profilés (1, 2) au moyen d'au moins un élément de fixation respectif (6) et d'un élément de maintien complémentaire associé (5), les profilés (1, 2) comportant deux bras de profilés parallèles (11), formés sur une âme transversale (23), et sur les deux bras de profilés (11) et sur leurs côtés tournés vers l'autre bras de profilé respectif, une barrette respective (12), et l'élément de liaison de coin (3) est constitué par deux pièces d'équerre (4) mobiles l'une par rapport à l'autre, les pièces d'équerre (4) comportant chacune une première surface en coin (22) dirigée vers un doigt (14) sur la barrette, le long de leurs bras (20) appliqués contre les profilés (1, 2) du côté détourné de la pièce d'équerre complémentaire (4), et du côté opposé du bras une seconde surface en coin (28) dirigée vers une pièce en coin (5), les deux profilés (1, 2) possédant chacun sur les deux bras de profilés (11) un bourrelet (13) parallèle à la barrette (12), les bourrelets (13) sont coiffés en coopération de formes par une pièce de coincement (7), et les pièces d'équerre (4) sont écartées l'une de l'autre par au moins une pièce en coin (5), laquelle est appliquée contre la seconde surface en coin (28) et est serrée contre le profilé associé (1, 2) par les moyens de fixation (6),
caractérisée en ce que
la pièce en coin (5) est agencée au-dessous des barrettes (12), par rapport à l'âme transversale (23), et en ce que la pièce de coincement (7) est agencée au-dessus des barrettes (12), et les bourrelets (13) sont dirigés vers le haut vers la pièce de coincement (7).

2. Jonction selon la revendication 1, caractérisée en ce que les barrettes (12) comportent chacune un bourrelet (13) tourné vers l'extrémité libre des bras de profilés (11), et la pièce de coincement (7) est une plaque en forme de parallélogramme traversée par les moyens de fixation (6) et qui comporte des saillies (45), lesquelles engagent les bourrelets (13) par l'arrière.

3. Jonction selon l'une ou l'autre des revendications 1 et 2, caractérisée en ce que les premières surfaces en coin (22) butent au niveau de la barrette (12) contre le doigt (14).

4. Jonction selon la revendication 3, caractérisée en ce que l'angle de coin des premières surfaces en coin (22) des bras (20) et celui des seconde surface en coin (28) sont de nature à assurer un auto-coincement.

5. Jonction selon la revendication 1, caractérisée en ce que les premières surfaces en coin (22) et/ou les barrettes (12) présentent un motif de rugosité, au moins dans la région de leur contact mutuel.

6. Pièce d'équerre pour un élément de jonction de coin (3) pour établir une jonction selon l'une des revendications 1 à 4, comprenant deux bras (20) agencés sous un angle l'un par rapport à l'autre, et une surface extérieure (21) parallèle au plan défini par les bras (20), lesdits bras (20) présentant des premières surfaces en coin rectilignes (22) qui partent de la surface extérieure (21), et les bras (20) ayant sur le côté opposé à la surface extérieure (21) chacun une seconde surface en coin (28) inclinée par rapport à la surface extérieure (21) et parallèle à la direction longitudinale des surfaces en coin (22), et la première surface en coin (22) s'étendant sur la totalité ou sur une partie du bras (20).

7. Pièce d'équerre selon la revendication 6, caractérisée en ce que la première surface en coin (22) monte depuis l'horizontale sous un angle de 5 à 30°, et en ce que la seconde surface en coin (28) s'écarte de la verticale d'un angle de 5 à 30°.

8. Pièce d'équerre selon la revendication 7, caractérisée en ce que l'angle des premières et des secondes surfaces en coin (22, 28) s'élève à environ 15°.

9. Pièce d'équerre selon l'une des revendications 6 à 8, caractérisée en ce que qu'elle est forgée en matrice.

10. Pièce d'équerre selon l'une des revendications 6 à 9, caractérisée en ce qu'elle est réalisée en alliage d'aluminium.

11. Structure d'ossature contenant une jonction de coin selon la revendication 1.
